Europäisches Patentamt

European Patent Office

Office européen des brevets

(19)

(11) **EP 0 623 801 B1**

(12) **EUROPÄISCHE PATENTSCHRIFT**

(45) Veröffentlichungstag und Bekanntmachung des Hinweises auf die Patenterteilung:
**20.05.1998 Patentblatt 1998/21**

(51) Int Cl.$^6$: **G01B 9/02**

(21) Anmeldenummer: **94106729.0**

(22) Anmeldetag: **29.04.1994**

(54) **Interferometrisches Messverfahren für Absolutmessungen sowie dafür geeignete Laserinterferometeranordnung**

Procedure and device for absolute measurements with a laser-interferometer

Dispositif et procédé interférométrique à laser pour des mesures absolues

(84) Benannte Vertragsstaaten:
**AT CH DE FR GB IT LI**

(30) Priorität: **03.05.1993 DE 4314488**

(43) Veröffentlichungstag der Anmeldung:
**09.11.1994 Patentblatt 1994/45**

(73) Patentinhaber:
- **Dr. Johannes Heidenhain GmbH
  83301 Traunreut (DE)**
- **FRAUNHOFER-GESELLSCHAFT ZUR FÖRDERUNG DER ANGEWANDTEN FORSCHUNG E.V.
  80636 München (DE)**

(72) Erfinder:
- **Thiel, Jürgen, Dipl.-Phys.
  D-52074 Aachen (DE)**
- **Michel, Dieter, Dipl.-Ing. (FH)
  D-83278 Traunstein (DE)**
- **Franz, Andreas, Dr.
  D-83308 Trostberg (DE)**

(56) Entgegenhaltungen:
**WO-A-88/06711         DE-A- 3 528 259
US-A- 3 970 389**

- **MEASUREMENT, Bd. 3, Nr. 4, Oktober 1985 LONDEN, GB, Seiten 175-184, H.-H. SCHÜSSLER 'Comparison and Calibration of Laser Interferometer Systems'**

## Beschreibung

Die Erfindung betrifft ein interferometrisches Meßverfahren für Absolutmessungen, insbesondere für absolute Abstandsmessungen, unter Verwendung eines wenigstens in einem Wellenlängenbereich modensprungfrei durchstimmbaren Lasers sowie eine für das Meßverfahren nach einem der vorhergehenden Ansprüche geeignete Laserinterferometeranordnung mit einem wenigstens in einem Wellenlängenbereich modensprungfrei durchstimmbaren Laser.

Aus der DE-PS 36 08 075 ist eine Vorrichtung zur Messung des Abstands eines Gegenstandes unter Verwendung eines Laserstrahls bekannt, die sich aus einem Meßinterferometer und einem Referenzinterferometer zusammensetzt. Beide Interferometer werden mit dem Strahl desselben Lasers beaufschlagt. Durch Frequenzmodulation des Laserstrahls wird aus jeweils zwei miteinander interferierenden Teilstrahlen eine sogenannte Referenzschwebungswelle erzeugt, wobei die Anzahl der Wellen in der Meßschwebungswelle bzw. der Referenzschwebungswelle mittels einer Meßvorrichtung ermittelt und aus dem Verhältniswert zwischen der Anzahl dieser Wellen und dem bekannten Abstand der Referenzstrecke der Meßabstand bestimmt wird.

Dieses Meßverfahren hat zum einen den Nachteil, daß die Phase der Referenzschwebungswelle höchstens mit einer Auflösung von etwa 1/10 der Gesamtwellenlänge der Schwebungswelle ermittelt werden kann. Diese Auflösung reicht bei weitem nicht an die mit anderen Methoden erreichbare Auflösung heran. Andererseits ist dieses Verfahren für in einem extremen Bereich variierende Meßstrecken ungeeignet. Diese Anforderungen sind jedoch beispielsweise bei Anlagensteuerungen in Fertigungsprozessen häufig relevant.

Aus diesen Nachteilen ergibt sich als Aufgabe der vorliegenden Erfindung, bei einem Verfahren bzw. einer Vorrichtung zur Abstandsmessung der eingangs bezeichneten Art sowohl die Meßgenauigkeit als auch den erfaßbaren Meßbereich zu erhöhen.

Diese Aufgabe wird bei dem erfindungsgemäßen Meßverfahren dadurch gelöst, daß zwei mit dem Laserstrahl desselben Lasers beaufschlagte Meßinterferometer mit jeweiligen Meßstrecken verwendet werden, wobei die aus der arithmetischen Summe oder Differenz der beiden Meßstrecken $L_1$ bzw. $L_2$ gebildete Referenzstrecke $L_{Ref}$ konstant gehalten wird, daß aus zwei interferierenden Teilstrahlen jeweils wenigstens ein mittels Photodetektoren gemessenes Interferenzsignal erzeugt wird, daß die Luftwellenlänge des Laserstrahls innerhalb eines modensprungfreien Wellenlängenbereichs zwischen den Werten $\lambda_1$ und $\lambda_2$ kontinuierlich durchgestimmt wird und daß während der Wellenlängenmodulation die integralen Phasenänderungen $\Delta\Phi_1$ und $\Delta\Phi_2$ der jeweiligen Interferenzsignale detektiert werden und die Länge einer der Meßstrecken nach der Formel

$$L_{1,2} = L_{Ref} \frac{1}{\dfrac{\Delta\Phi_{2,1}}{\Delta\Phi_{1,2}} \pm 1}$$

bestimmt wird.

Dieses Meßverfahren hat gegenüber dem bekannten Verfahren den Vorteil, daß die Länge der Referenzstrecke mit der Länge der beiden Meßstrecken, d.h. der Größe des zu ermittelnden Meßabstandes, skaliert werden kann. Dadurch ist die insgesamt erreichbare Meßauflösung auch bei sehr unterschiedlichen Meßabständen sichergestellt.

Bei dem erfindungsgemäßen Meßverfahren kann weiter vorgesehen sein, daß die Wellenlängenmodulation über den Betriebsstrom des Lasers erfolgt.

Um die Zeit für einen Meßzyklus möglichst gering zu halten und damit Fehlereinflüsse zu minimieren, kann es vorteilhaft sein, die Wellenlängenänderung nur durch eine Strommodulation, nicht aber durch beispielsweise eine Temperaturänderung der Wärmesenke des Lasers, vorzugsweise Halbleiterlasers, durchzuführen. Zwar ist der kontinuierliche Durchstimmbereich bei einer Temperaturänderung um etwa einen Faktor 5 größer als derjenige bei einer Stromänderung, jedoch benötigt dieser Prozeß mehrere Sekunden im Gegensatz zu wenigen Millisekunden bei einer Strommodulation.

Die erreichbare Meßauflösung kann erfindungsgemäß noch weiter dadurch erhöht werden, daß die jeweiligen Restphasen im Bereich der Wellenlängenwerte $\lambda_1$ und $\lambda_2$ ermittelt werden. Als Restphasen werden die in den Endbereichen des gesamten Wellenlängenintervalls bruchteiligen Phasenwerte bezeichnet.

Eine weitere Auflösungserhöhung bei der Phasenmessung kann erfindungsgemäß dadurch erreicht werden, daß die Ermittlung der Phasenänderung anhand der aus zwei um 90° phasenverschobenen Interferenzsignalen gebildeten ellipsenförmigen Lissajous-Figur erfolgt.

Die Auswertung der Lissajous-Ellipse gestattet eine äußerst genaue Ermittlung der Phasen der Interferenzsignale, insbesondere der Restphasen. Um diese Auswertung zweckmäßig durchführen zu können, muß allerdings gewährleistet sein, daß die von den Photodetektoren registrierten Lichtintensitäten der um 90° phasenverschobenen Interferenzsignale in einer zweiachsigen Darstellung auf einer kreisförmigen Lissajous-Kurve zu liegen kommen. In der Regel liegen jedoch die gemessenen Phasenwerte nicht auf einem Kreis, sondern auf einer Ellipse, die aufgrund der Leistungscharakteristika bei einer Strommodulation nicht geschlossen ist, sondern sich spiralförmig aufweitet. Für die Ellipsenform sind hauptsächlich eine nicht exakte 90°-Phasenverschiebung, ungleiche Verstärkungsfaktoren der beiden um 90° - phasenverschobenen Interferenzsignale sowie das Auftreten eines Offsets bei nur einem der beiden Interferenzsignale verantwortlich. Eine Möglichkeit zur Korrektur der gemessenen Phasenwerte bietet ein bekanntes Verfahren nach 'Heydemann', bei dem eine Elliptizität der Lissajous-Kurve durch eine Hauptachsentransformation in einen Kreis umgewandelt wird. Anhand einer in dieser Weise korrigierten Lissajous-Kurve sind Winkelauflösungen von etwa 1° erreichbar.

Neben absolutinterferometrischen Messungen können damit im übrigen auch relative Abstandsmessungen durchgeführt und durch Einbringen eines Lambda/4-Plättchens in wenigstens eine der Meßstrecken bekanntlich auch die Richtung der Relativbewegungen des zu vermessenden Objekts ermittelt werden.

Bei dem erfindungsgemäßen Meßverfahren kann ferner vorgesehen sein, daß die Phasenänderungen $\Delta\Phi_1$ und $\Delta\Phi_2$ mittels desselben Triggersignals durch Überabtastung bestimmt werden.

Die integrale Phasenänderung wird im allgemeinen in Form einer treppenförmigen Digitalisierungskurve meßtechnisch erfaßt. Die Anzahl der Digitalisierungsstufen ist in der Absolutinterferometrie mit heute kommerziellen Halbleiter-Lasern im allgemeinen äußerst gering und um den Faktor

$$\frac{\lambda_{1,2}}{\lambda_2 - \lambda_1} \cong 4.000$$

geringer als in der herkömmlichen Interferometrie. Eine Erhöhung der Phasenauflösung kann bei einer digitalen Datenerfassung durch eine Überabtastung ("oversampling") der Meßelektronik mit einer konstanten Abtastrate erreicht werden. Die Auflösungserhöhung ist dabei proportional zum Verhältnis der Stufenlänge zur Länge eines Abtastintervalls. Die Wellenlängenendbereiche, innerhalb derer die Überabtastung erfolgt, entsprechen maximal 1/2 des gesamten Wellenlängenintervalls.

Bei dem erfindungsgemäßen Meßverfahren kann ferner vorgesehen sein, daß zumindest bei einem der Meßinterferometer aus wenigstens zwei interferierenden Teilstrahlen jeweils gegeneinander phasenverschobene Interferenzsignale erzeugt werden, die jeweils mittels eines Photodetektors gemessen werden.

Die Erzeugung von beispielsweise um 90° phasenverschobenen Interferenzsignalen kann bekanntermaßen durch Einbringen eines Lambda/4-Plättchens in den Strahlweg erfolgen. Diese Verfahrensweise bietet einerseits den Vorteil, daß neben absolutinterferometrischen Messungen auch relative Abstandsmessungen durchgeführt werden können, wobei durch Einbringen eines Lambda/4-Plättchens in wenigstens eine der Meßstrecken bekanntlich auch die Richtung der Relativbewegungen des zu vermessenden Objekts ermittelt werden kann.

Bei dem erfindungsgemäßen Meßverfahren kann schließlich vorgesehen sein, daß ein zweiter, einen Laserstrahl mit mindestens einer weiteren diskreten Wellenlänge $\lambda_3$ emittierender Laser oder ein Mehrwellenlängenlaser verwendet wird, dessen Laserstrahl ebenfalls in die jeweiligen Interferometer eingekoppelt wird, wobei die Laserwellenlängen nacheinander im Wechsel betrieben werden und wobei der Wellenlängenwert $\lambda_3$ so auf die Wellenlängenwerte $\lambda_1$ und $\lambda_2$ abgestimmt wird, daß durch eine nachträglich mittels einer Elektronik oder eines Rechners durchgeführte Überlagerung der Interferenzsignale eine synthetische Schwebung mit einer bestimmten Schwebungswellenlänge gebildet wird.

Durch diese Maßnahmen kann die Längenauflösung bei dem erfindungsgemäßen Meßverfahren weiter erhöht werden. Aufgrund der zusätzlichen diskreten Wellenlänge kann beispielsweise eine Schwebungswellenlänge erzeugt werden, die größer als die Meßunsicherheit aufgrund der Methode der kontinuierlichen Durchstimmung der Wellenlänge ist.

Die der Erfindung zugrundeliegende Aufgabe wird bei einer für das erfindungsgemäße Meßverfahren geeigneten Laserinterferometeranordnung dadurch gelöst, daß zwei jeweils eine Meßstrecke aufweisende Meßinterferometer vorgesehen sind, bei denen die aus der arithmetischen Summe oder Differenz der beiden Meßstrecken gebildete Referenzstrecke eine konstante Länge aufweist und die jeweils einen Strahlteiler, einen räumlich feststehenden Reflektor sowie einen beweglichen Reflektor aufweisen und die mittels eines Primärstrahlteilers sowie mindestens eines weiteren Reflektors oder Lichtwellenleiters mit dem Strahl desselben Lasers beaufschlagt sind, wobei jeweils ein Interferenzsignal gebildet wird, das mittels eines Photodetektors erfaßt wird.

Dabei können die Strahlteiler der beiden Interferometer die Enden der Referenzstrecke bestimmen, wobei die jeweiligen Meßreflektoren beweglich sind. Es ist aber auch eine Ausführung möglich, bei der die Strahlteiler der beiden Interferometer beweglich sind, während die jeweiligen Meßreflektoren die Enden der Referenzstrecke bestimmen.

Bei der erfindungsgemäßen Laserinterferometeranordnung kann weiter vorgesehen sein, daß der Laser ein Halbleiterlaser ist.

Bei der erfindungsgemäßen Laseranordnung kann weiter vorgesehen sein, daß für die Interferenzsignale der Meßinterferometer Vorverstärker vorgesehen sind, deren Verstärkungsfaktor sich umgekehrt proportional zur Laserleistung verhält. Dies führt dazu, daß nach den Vorverstärkern die Signalpegel unabhängig von der Laserleistung und damit von der Wellenlänge sind,

Bei der erfindungsgemäßen Laserinterferometeranordnung kann weiter vorgesehen sein, daß wenigstens eines der Meßinterferometer zwei um 90° phasenverschobene Interferenzsignale aufweist, die jeweils mittels Photodetektoren erfaßt werden.

Aufgrund dieser Maßnahme kann einerseits erreicht werden, daß die entsprechend dem Meßverfahren durchzuführende Phasenauswertung anhand der Lissajous-Kurven überhaupt ermöglicht wird. Andererseits läßt sich bekanntlich durch Einbringen eines Lambda/4-Plättchens in eine der Meßstrecken auch die Richtung der Relativbewegungen des/der beweglichen Reflektors(en) ermitteln.

Die erfindungsgemäße Laserinterferometeranordnung kann ferner so ausgebildet sein, daß die Meßstrecken auf einer Achse fluchtend angeordnet sind, wobei die beweglichen Reflektoren jeweils rückseitig miteinander starr verbunden und zwischen den Strahlteilern der beiden Meßinterferometer entlang der Meßstrecken linear beweglich angeordnet sind und wobei die aus der arithmetischen Summe der beiden Meßstrecken gebildete Referenzstrecke eine konstante Länge aufweist.

Die erfindungsgemäße Laserinterferometeranordnung kann ferner so ausgebildet sein, daß die Meßstrecken entlang von parallel verlaufenden Achsen angeordnet sind, wobei die beweglichen Retroreflektoren starr verbunden und linear beweglich angeordnet sind und wobei die aus der arithmetischen Differenz der beiden Meßstrecken gebildete Referenzstrecke eine konstante Länge aufweist.

Bei der erfindungsgemäßen Laserinterferometeranordnung kann ferner vorgesehen sein, daß die Meßstrecken auf einer Achse fluchtend angeordnet sind, wobei zwischen den Strahlteilern der beiden Meßinterferometer ein entlang der Meßstrecken linear beweglicher Reflektor angeordnet ist und wobei die aus der arithmetischen Summe der beiden Meßstrecken gebildete Referenzstrecke eine konstante Länge aufweist. Hierbei sind die Interferometerarme so angeordnet, daß ein gemeinsamer Reflektor verwendet werden kann.

Bei der erfindungsgemäßen Laserinterferometeranordnung kann ferner vorgesehen sein, daß zur Automatisierung der Phasenauswertung ein Zähler bzw. eine Zählelektronik sowie eine Auswerteelektronik oder ein Rechner vorgesehen sind.

Hierdurch lassen sich sämtliche Schritte bei dem Meßverfahren automatisieren und daher sukzessive aufeinanderfolgende Abstandsmessungen durchführen.

Bei der erfindungsgemäßen Laserinterferometeranordnung kann schließlich vorgesehen sein, daß wenigstens ein Teil der Anordnung als integrierte Optik und Teile des Lichtweges als Lichtwellenleiter ausgebildet sind.

Eine Miniaturisierung wird erst durch die ausschließliche Verwendung von in der integrierten Optik bekannten Standardbauteilen möglich und erschließt der erfindungsgemäßen Laserinterferometeranordnung einen noch umfassenderen Anwendungsbereich.

Im folgenden Teil wird das erfindungsgemäße Meßverfahren anhand eines Ausführungsbeispieles der erfindungsgemäßen Laserinterferometeranordnung näher erläutert.

Im einzelnen zeigen:

Fig. 1    ein Ausführungsbeispiel der erfindungsgemäßen Laserinterferomteranordnung, bei dem die Referenzstrecke aus der Differenz der beiden Meßstrecken gebildet ist;

Fig. 2    ein Ausführungsbeispiel der erfindungsgemäßen Laserinterferomteranordnung entsprechend Fig. 1, bei dem jedoch die Referenzstrecke aus der Summe der beiden Meßstrecken gebildet ist;

Fig. 3    ein Beispiel für das Meßverfahren mit einer Darstellung der Wellenlängenmodulation sowie zweier daraus resultierender Phasenverläufe der in den beiden Meßinterferometern auftretenden Interferenzsignale;

Fig. 4    eine Darstellung der Lissajous-Ellipse zweier um 90° phasenverschobener Interferenzsignale und

Fig. 5    einen Signalverlauf zur Phasenbestimmung entsprechend der Methode der Variation der Laserwellenlänge im Bereich der Restphasen.

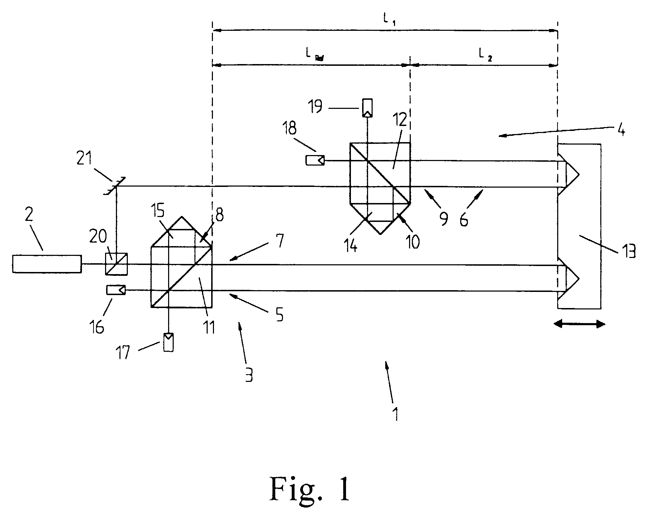

Die in Fig. 1 dargestellte absolutmessende Laserinterferometeranordnung 1 weist einen wenigstens in einem Wellenlängenbereich modensprungfrei durchstimmbaren Halbleiterlaser 2 auf, der mittels einer nicht dargestellten Betriebsstromversorgung in einem modensprungfreien Wellenlängenbereich seiner Kennlinie moduliert wird. Weiter sind zwei Meßinterferometer 3,4 vorgesehen, bei denen die Interferometerarme 5,6 die eigentlichen Meßstrecken (5,6) bilden. In diesem Beispiel weist die aus der arithmetischen Differenz der beiden Meßstrecken $L_1$ und $L_2$ 5,6 gebildete Referenzstrecke $L_{Ref}$ eine konstante Länge auf. Zur Erzeugung von jeweils mindestens zwei miteinander interferierenden Teilstrahlen 7,8 bzw. 9,10 sind jeweils Strahlteiler 11,12 und eine aus zwei Retroreflektoren $13_1$ und $13_2$ gebildete verschiebbare Retroreflektorbaueinheit 13 sowie zwei feststehende Retroreflektoren 14,15 vorgesehen. Die Erfassung der jeweils interferierenden Teilstrahlen 7,8 bzw. 9,10 erfolgt mittels Photodetektoren 16,17 bzw. 18,19. Ferner sind die Photodetektoren 16,17,18,19 mit einer hier nicht dargestellten Zählelektronik und der Halbleiterlaser 2 mit einer ebenfalls nicht dargestellten Regeleinrichtung für die Laserwellenlänge gekoppelt. Die beiden Meßinterferometer 3,4 werden mittels eines Primärstrahlteilers 20 sowie eines Reflektors bzw. Spiegels 21 mit dem Strahl desselben Halbleiterlasers 2 beaufschlagt. Die Meßstrecken 5,6 sind im übrigen entlang von parallel verlaufenden Achsen angeordnet, wobei der bewegliche Retroreflektor 13 parallel zu den Meßstrecken 5,6 linear beweglich angeordnet ist. Bei einer Bewegung des Retroreflektors 13 weist die aus der arithmetischen Differenz der beiden Meßstrecken 5,6 gebildete Referenzstrecke eine konstante Länge auf. Aufgrund der ausschließlichen Verwendung von Standardbauteilen läßt sich die gesamte Laserinterferometeranordnung 30 als integrierte Optik ausbilden.

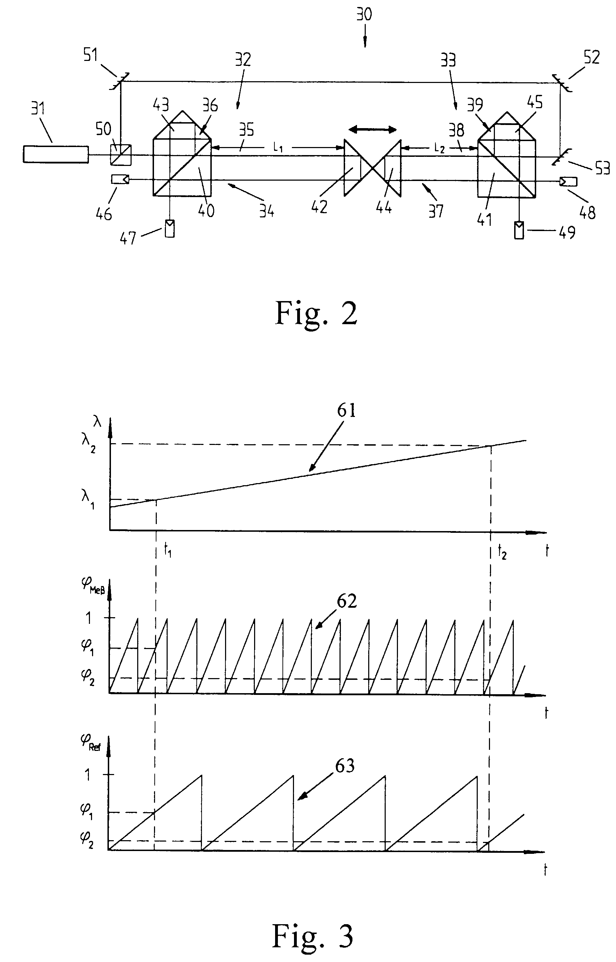

Die in Fig. 2 dargestellte absolutmessende Laserinterferometeranordnung 30 weist einen wenigstens in einem Wellenlängenbereich modensprungfrei durchstimmbaren Halbleiterlaser 31 auf, der mittels einer nicht dargestellten Betriebsstromversorgung in einem modensprungfreien Wellenlängenbereich seiner Kennlinie moduliert wird. Weiter sind zwei Meßinterferometer 32,33 vorgesehen, bei denen die Interferometerarme 34,37 die eigentlichen Meßstrecken (34,37) bilden. In diesem Beispiel weist die aus der arithmetischen Summe der beiden Meßstrecken 34,37 gebildete Referenzstrecke eine konstante Länge auf. Zur Erzeugung von jeweils mindestens zwei miteinander interferierenden Teilstrahlen 35,36 bzw. 38,39 sind jeweils Strahlteiler 40,41 sowie zwei Retroreflektoren 42,43 bzw. 44,45 vorgesehen. Die Erfassung der jeweils interferierenden Teilstrahlen 35,36 bzw. 38,39 erfolgt mittels Photodetektoren 46,47 bzw. 48,49. Ferner sind die Photodetektoren 46,47,48,49 mit einer hier nicht dargestellten Zählelektronik und der Halbleiterlaser 31 mit einer ebenfalls nicht dargestellten Regeleinrichtung für die Laserwellenlänge gekoppelt. Die beiden Meßinterferometer 32,33 werden mittels eines Primärstrahlteilers 50 sowie dreier Reflektoren bzw. Spiegel 51,52,53 mit dem Strahl desselben Halbleiterlasers 31 beaufschlagt. Die Meßstrecken 34,37 sind im übrigen auf fluchtend verlaufenden Achsen angeordnet, wobei die beweglichen Retroreflektoren 42,44 zu einer starren Einheit verbunden und entlang der Meßstrecken 34,37 linear beweglich angeordnet sind, wobei die aus der arithmetischen Summe der beiden Meßstrecken 34,37 gebildete Referenzstrecke eine konstante Länge aufweist. Aufgrund der ausschließlichen Verwendung von Standardbauteilen läßt sich auch diese Laserinterferometeranordnung 30 als integrierte Optik ausbilden.

Im oberen Teil der Fig. 3 ist eine linear modulierte Wellenlängenkurve 61 dargestellt, bei der zum Zeitpunkt $t_1$ bei einem Wellenlängenwert $\lambda_1$ ein Meßzyklus beginnt, der zum Zeitpunkt $t_2$ bei einem Wellenlängenwert $\lambda_2$ endet. Diese beiden Wellenlängenwerte werden unter anderem so gewählt, daß das zwischen ihnen liegende Wellenlängenintervall innerhalb eines modensprungfreien Bereichs der Kennlinie des Halbleiterlaser 31 liegt. Die in den Meßinterferometern 32,33 während der Wellenlängenmodulation auftretenden Phasenänderungen 62,63 der Interferenzsignale 35,36,38,39 ist im unteren Bildteil der Fig. 3 dargestellt. Das Sägezahnprofil dieser Kurven 62,63 ergibt sich daraus, daß beim Durchstimmen der Laserwellenlänge die Phase sich immer so lange linear ändert, bis in eine neue Interferenzordnung übergesprungen wird. Die unterschiedliche Anzahl der durchlaufenen Phasen der in den beiden Meßinterferometern 32,33 gemessenen Interferenzsignale ist eine Folge der unterschiedlichen Meßstreckenlängen der Meßinterferometer 32,33. Die integrale

Phasenänderung $\Delta\Phi$ ergibt sich nun durch einfaches Abzählen der Sägezahnpeaks und unter Hinzurechnung der an den Endpunkten der Meßkurven 62,63 ermittelten Restphasen. Die Bestimmung der Meßstrecke 34 (oder 37) erfolgt schließlich aus den in den beiden Meßinterferometern 32,33 gemessenen integralen Phasenänderungen und der bekannten Länge der Referenzstrecke nach der in Anspruch 1 genannten Formel. Auf die Ermittlung der jeweiligen Restphasen wird nachfolgend noch eingegangen.

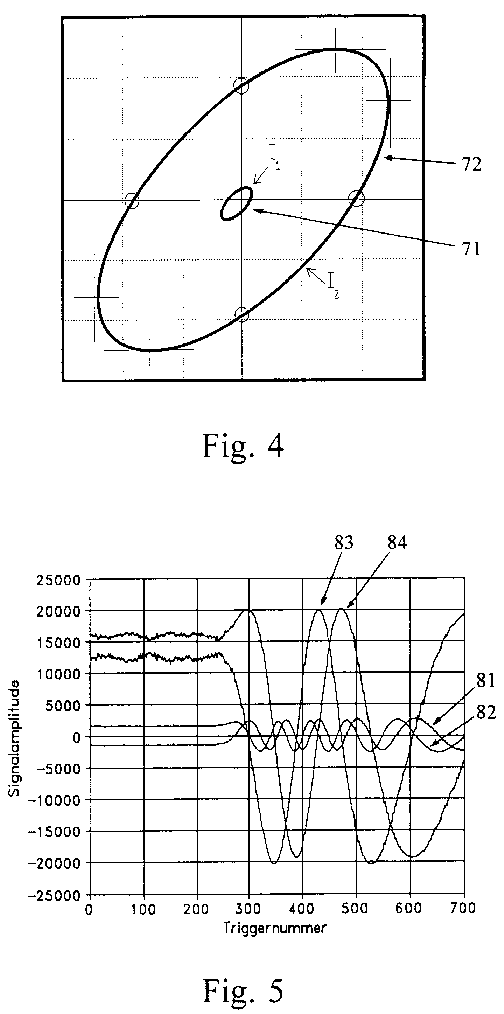

Fig. 4 zeigt eine typische Lissajous-Ellipse, die durch analytische Anpassung an zwei um 90° phasenverschobene und mittels der Photodetektoren 46,47 bzw. 48,49 erfaßte Interferenzsignale ermittelt worden ist. Die innere Lissajous-Kurve 71 stellt den Phasenverlauf der beiden Interferenzsignale einer Wellenperiode zu Beginn eines Meßzyklusses dar, die äußere Kurve 72 dagegen den Phasenverlauf am Ende eines Meßzyklusses. Die unterschiedlichen Radien sind demnach eine Folge der mit der Wellenlänge ansteigenden Leistungscharakteristik des Halbleiterlasers 31. Die Restphasen $\varphi_1$ bzw. $\varphi_2$ liegen jeweils auf einer dieser Kurven und lassen sich daraus äußerst genau bestimmen. Es wird allerdings in der Regel dabei zweckmäßig sein, die Ellipse nach dem vorher bereits zitierten bekannten Verfahren zuvor in einen Kreis zu transformieren.

Schließlich zeigt Fig. 5 einen Signalverlauf zur Phasenbestimmung entsprechend der Methode der Variation der Laserwellenlänge im Bereich der Wellenlängenendwerte. Hierbei werden zusätzlich zu den dort statisch ermittelten Phasenwerten die Phasen einer vollständigen Periode aufgenommen. Das Diagramm in Fig. 5 zeigt dies für zu Beginn eines Meßzyklusses aufgenommene Phasendaten 81,82 der um 90° phasenverschobenen Interferenzsignale sowie entsprechend am Ende gemessene Daten 83,84. Die Aufnahme dieser Kurven 81,82,83,84 erfolgt durch eine Variation des Betriebsstromes des Halbleiterlasers 31, wodurch eine Phasenänderung über mindestens eine Periode hervorgerufen wird. An die in dieser Weise ermittelten Daten wird eine Lissajous-Ellipse angepaßt, die dann entsprechend dem Verfahren nach Fig. 4 ausgewertet werden kann.

**Patentansprüche**

1.  Interferometrisches Meßverfahren für Absolutmessungen, insbesondere für absolute Abstandsmessungen,
    unter Verwendung eines wenigstens in einem Wellenlängenbereich modensprungfrei durchstimmbaren Lasers,
    **gekennzeichnet dadurch,**

    daß zwei mit dem Laserstrahl desselben Lasers beaufschlagte Meßinterferometer mit jeweiligen Meßstrecken verwendet werden,

wobei die aus der arithmetischen Summe oder Differenz der beiden Meßstrecken $L_1$ bzw. $L_2$ gebildete Referenzstrecke $L_{Ref}$ konstant gehalten wird,

daß aus zwei interferierenden Teilstrahlen jeweils wenigstens ein mittels Photodetektoren gemessenes Interferenzsignal erzeugt wird,

daß die Luftwellenlänge des Laserstrahls innerhalb eines modensprungfreien Wellenlängenbereichs zwischen den Werten $\lambda_1$ und $\lambda_2$ kontinuierlich durchgestimmt wird

und daß während der Wellenlängenmodulation die integralen Phasenänderungen $\Delta\Phi_1$ und $\Delta\Phi_2$ der jeweiligen Interferenzsignale detektiert werden und die Länge einer der Meßstrecken nach der Formel

$$L_{1,2} = L_{Ref} \frac{1}{\frac{\Delta\Phi_{2,1}}{\Delta\Phi_{1,2}} \pm 1}$$

bestimmt wird.

2. Meßverfahren nach Anspruch 1, gekennzeichnet dadurch, daß die Wellenlängenmodulation über den Betriebsstrom des Lasers erfolgt.

3. Meßverfahren nach Anspruch 1 oder 2, gekennzeichnet dadurch, daß die jeweiligen Restphasen im Bereich der Wellenlängenwerte $\lambda_1$ und $\lambda_2$ ermittelt werden.

4. Meßverfahren nach einem der Ansprüche 1 bis 3, gekennzeichnet dadurch, daß die Ermittlung der Phasenänderung anhand der aus zwei um 90° phasenverschobenen Interferenzsignalen gebildeten ellipsenförmigen Lissajous-Figur erfolgt.

5. Meßverfahren nach einem der vorhergehenden Ansprüche, gekennzeichnet dadurch, daß die Phasenänderungen $\Delta\Phi_1$ und $\Delta\Phi_2$ mittels desselben Triggersignals durch Überabtastung bestimmt werden.

6. Meßverfahren nach einem der vorhergehenden Ansprüche, gekennzeichnet dadurch, daß zumindest bei einem der Meßinterferometer aus wenigstens zwei interferierenden Teilstrahlen jeweils gegeneinander phasenverschobene Interferenzsignale erzeugt werden, die jeweils mittels eines Photodetektors gemessen werden.

7. Meßverfahren nach einem der vorhergehenden Ansprüche, gekennzeichnet dadurch, daß ein zweiter, einen Laserstrahl mit mindestens einer weiteren diskreten Wellenlänge $\lambda_3$ emittierender Laser oder ein Mehrwellenlängenlaser verwendet wird, dessen Laserstrahl ebenfalls in die jeweiligen Interferometer eingekoppelt wird, wobei die Laserwellenlängen nacheinander im Wechsel betrieben werden und wobei der Wellenlängenwert $\lambda_3$ so auf die Wellenlängenwerte $\lambda_1$ und $\lambda_2$ abgestimmt wird, daß durch eine nachträglich mittels einer Elektronik oder eines Rechners durchgeführte Überlagerung der Interferenzsignale eine synthetische Schwebung mit einer bestimmten Schwebungswellenlänge gebildet wird.

8. Für das Meßverfahren nach einem der vorhergehenden Ansprüche geeignete Laserinterferometeranordnung
   mit einem wenigstens in einem Wellenlängenbereich modensprungfrei durchstimmbaren Laser, **gekennzeichnet dadurch,**

   daß zwei jeweils eine Meßstrecke aufweisende Meßinterferometer vorgesehen sind,

   bei denen die aus der arithmetischen Summe oder Differenz der beiden Meßstrecken gebildete Referenzstrecke eine konstante Länge aufweist

   und die jeweils einen Strahlteiler, einen räumlich feststehenden Reflektor sowie einen beweglichen Reflektor aufweisen und die mittels eines Primärstrahlteilers sowie mindestens eines weiteren Reflektors oder Lichtwellenleiters mit dem Strahl desselben Lasers beaufschlagt sind, wobei jeweils ein Interferenzsignal gebildet wird, das mittels eines Photodetektors erfaßt wird.

9. Laserinterferometeranordnung nach Anspruch 8, gekennzeichnet dadurch, daß der Laser ein Halbleiterlaser ist.

10. Laserinterferometeranordnung nach Anspruch 8 oder 9, gekennzeichnet dadurch, daß für die Interferenzsignale der Meßinterferometer Vorverstärker vorgesehen sind, deren Verstärkungsfaktor sich umgekehrt proportional zur Laserleistung verhält.

11. Laserinterferometeranordnung nach einem der Ansprüche 8 bis 10, gekennzeichnet dadurch, daß wenigstens eines der Meßinterferometer zwei um 90° phasenverschobene Interferenzsignale aufweist, die jeweils mittels Photodetektoren erfaßt werden.

12. Laserinterferometeranordnung nach einem der Ansprüche 8 bis 11, gekennzeichnet dadurch, daß die Meßstrecken auf einer Achse fluchtend angeordnet sind, wobei die beweglichen Reflektoren jeweils rückseitig miteinander starr verbunden und zwischen den Strahlteilern der beiden Meßinterferometer entlang der Meßstrecken linear beweglich angeordnet sind und wobei die aus der arithmetischen Summe der beiden Meßstrecken gebildete Referenzstrecke eine konstante Länge aufweist.

13. Laserinterferometeranordnung nach einem der Ansprüche 8 bis 11, gekennzeichnet dadurch, daß die Meßstrecken entlang von parallel verlaufenden Achsen angeordnet sind, wobei die beweglichen Retroreflektoren starr verbunden und linear beweglich angeordnet sind und wobei die aus der arithmetischen Differenz der beiden Meßstrecken gebildete Referenzstrecke eine konstante Länge aufweist.

14. Laserinterferometeranordnung nach einem der Ansprüche 8 bis 11, gekennzeichnet dadurch, daß die Meßstrecken auf einer Achse fluchtend angeordnet sind, wobei zwischen den Strahlteilern der beiden Meßinterferometer ein entlang der Meßstrecken linear beweglicher Reflektor angeordnet ist und wobei die aus der arithmetischen Summe der beiden Meßstrecken gebildete Referenzstrecke eine konstante Länge aufweist.

15. Laserinterferometeranordnung nach einem der Ansprüche 8 bis 14, gekennzeichnet dadurch, daß zur Automatisierung der Phasenauswertung ein Zähler bzw. eine Zählelektronik sowie eine Auswerteelektronik oder ein Rechner vorgesehen sind.

16. Laserinterferometeranordnung nach einem der Ansprüche 8 bis 15, gekennzeichnet dadurch, daß wenigstens ein Teil der Anordnung als integrierte Optik und Teile des Lichtweges als Lichtwellenleiter ausgebildet sind.

## Claims

1. An interferometric measuring method for absolute measurements, especially for absolute distance measurements,
using a laser which can be tuned without mode jumps at least in one wavelength region,
characterized in that two measuring interferometers responsive to the laser beam of the same laser are used, with respective measuring paths,

wherein the reference path $L_{Ref}$ formed from the sum or difference of the two measuring paths $L_1$ and $L_2$ is held constant,
in that at least one interference signal measured by means of photo-detectors is generated in each case from two interfering component beams,
in that the air wavelength of the laser beam is continuously tuned within a wavelength range free from mode jumps between the values $\lambda_1$ and $\lambda_2$,
and in that during the wavelength modulation the integral phase changes $\Delta\phi_1$ and $\Delta\phi_2$ of the respective interference signals are detected and the length of one of the measuring paths is determined according to the formula

$$L_{1,2} = L_{Ref} \frac{1}{\dfrac{\Delta\phi_{2,1}}{\Delta\phi_{1,2}} \pm 1}$$

2. A measuring method according to claim 1 or 2, characterized in that the wavelength modulation is effected through the operating current of the laser.

3. A measuring method according to claim 1 or 2, characterized in that the respective residual phases are determined in the region of the wavelength values $\lambda_1$ and $\lambda_2$.

4. A measuring method according to any of claims 1 to 3, charactenzed in that the determination of the phase change is effected using the ellipsoidal Lissajous figure formed from two interference signals phase displaced by 90°.

5. A measuring method according to any of the preceding claims, characterized in that the phase changes $\Delta\phi_1$ and $\Delta\phi_2$ are determined by means of the same trigger signal by over-sampling.

6. A measunng method according to any of the preceding claims, characterized in that at least in the case of one of the measunng interferometers mutually phase displaced interference signals are generated from at least two interfering component beams and are measured by means of a photodetector.

7. A measuring method according to any of the preceding claims, characterized in that a second laser emitting a laser beam with at least one further discrete wavelength $\lambda_3$ or a multiple wavelength laser is used, whose laser beam is also coupled into the respective interferometers, wherein the laser wavelengths are used alternately one after the other and wherein the wavelength value $\lambda_3$ is so tuned relative to the wavelength values $\lambda_1$ and $\lambda_2$ that a synthetic beat with a specific beat wavelength is formed through a following superimposition of the interference signals electronically or by means of computer.

8. A laser interferometer arrangement suitable for the measuring method according to any of the preceding claims,
with a laser which can be tuned at least in one wavelength region without mode jumps,
characterized in that two measuring interferometers are provided, each with a measuring path, in which the reference path formed from the arithmetic sum or difference of the two measuring paths has a constant length,
and which each comprise a beam splitter, a spatially fixed reflector and a movable reflector and which are responsive to the beam of the same laser through a primary beam splitter and at least one further reflector or optical waveguide, wherein an interference signal is formed in each case, which is detected by means of a photo detector.

9. A laser interferometer arrangement according to claim 8, characterized in that the laser is a semiconductor laser.

10. A laser interferometer arrangement according to claim 8 or 9, characterized in that pre-amplifiers are provided for the interference signals of the measuring interferometers, with their gain factors inversely proportional to the laser power.

11. A laser interferometer arrangement according to any of claims 8 to 10, charactenzed in that at least one of the measuring interferometers has two interference signals phase displaced by 90°, which are detected by means of respective photo detectors.

12. A laser interferometer arrangement according to any of claims 8 to 11, characterized in that the measuring paths are arranged in line on an axis, wherein the movable reflectors are rigidly connected together back to back and are arranged linearly movable between the beam splitters of the two measuring interferometers along the measunng paths, and wherein the reference path formed from the arithmetic sum of the two measuring paths has a constant length.

13. A laser interferometer arrangement according to any of claims 8 to 11, characterized in that the measuring paths are disposed along parallel axes, wherein the movable retro-reflectors are rigidly connected together and are linearly movable, and wherein the reference path formed from the arithmetic difference of the two measuring paths has a constant length.

14. A laser interferometer arrangement according to any of claims 8 to 11, characterized in that the measuring paths are arranged in line on an axis, wherein a reflector movable linearly along the measuring paths is arranged between the beam splitters of the two measuring interferometers and wherein the reference path formed from the arithmetic sum of the two measuring paths has a constant length.

15. A laser interferometer arrangement according to any of claims 8 to 14, characterized in that a counter or counter electronics and evaluation electronics or a computer are provided to automate the phase evaluation.

16. A laser interferometer arrangement according to any of claims 8 to 15, characterized in that at least part of the arrangement is formed as integrated optics and parts of the light path are formed as optical waveguides.

## Revendications

1. Procédé interférométrique pour la mesure absolue de distances, utilisant un laser (2) accordable sans changement de mode à l'intérieur d'au moins une plage de longueur d'onde,
caractérisé

en ce que l'on utilise deux interféromètres de mesure avec des trajets de mesure correspondants qui reçoivent le rayon laser du même laser,
le trajet de référence $L_{Ref}$ formé à partir de la somme ou de la différence arithmétique des deux trajets de mesure $L_1$ et $L_2$ étant maintenu constant, en ce que l'on produit à partir de deux rayons partiels en interférence chaque fois au moins un signal d'interférence qui est mesuré à l'aide de détecteurs photo-électriques,
en ce que l'on fait varier de manière continue la longueur d'onde dans l'air du rayon laser à l'intérieur d'une plage de longueur d'onde sans changement de mode, entre les valeurs $\lambda_1$ et $\lambda_2$,
et en ce que l'on détecte les variations de phase $\Delta\phi_1$ et $\Delta\phi_2$ intégrales des signaux d'interférence concernés pendant la modulation de la longueur d'onde et que l'on détermine la longueur de l'un des trajets de mesure selon la formule

$$L_{1,2} = L_{Ref} \frac{1}{\dfrac{\Delta\phi_{2,1}}{\Delta\phi_{1,2}} \pm 1}$$

2. Procédé de mesure selon la revendication 1, caractérisé en ce que la modulation de la longueur d'onde est réalisée par le biais du courant de service du laser.

3. Procédé de mesure selon la revendication 1 ou 2, caractérisé en ce que l'on détermine les phases résiduelles concernées dans la plage des valeurs de longueur d'onde $\lambda_1$ et $\lambda_2$.

4. Procédé de mesure selon une des revendications 1 à 3, caractérisé en ce que l'on détermine la variation de phase à l'aide de la courbe de Lissajous en forme d'ellipse formée à partir de deux signaux d'interférence déphasés de 90°.

5. Procédé de mesure selon une des revendications précédentes, caractérisé en ce que l'on détermine les variations de phase $\Delta\phi_1$ et $\Delta\phi_2$ à l'aide du même signal de déclenchement, par suréchantillonnage.

6. Procédé de mesure selon une des revendications précédentes, caractérisé en ce que dans au moins un des interféromètres de mesure, on produit à partir d'au moins deux rayons partiels en interférence des signaux d'interférence mutuellement déphasés que l'on mesure chaque fois à l'aide d'un détecteur photo-électrique.

7. Procédé de mesure selon une des revendications précédentes, caractérisé en ce que l'on utilise un deuxième laser ou un laser à plusieurs longueurs d'onde émettant un rayon laser avec au moins une longueur d'onde supplémentaire $\lambda_3$ discrète, dont le rayon laser est également couplé dans les interféromètres concernés, les longueurs d'onde laser étant utilisées successivement, en alternance, et la valeur de longueur d'onde $\lambda_3$ étant accordée avec les valeurs de longueur d'onde $\lambda_1$ et $\lambda_2$ de telle sorte que, par une superposition des signaux d'interférence opérée après coup à l'aide d'une électronique ou d'un calculateur, on obtienne un battement synthétique avec une longueur d'onde de battement déterminée.

8. Dispositif d'interférométrie laser adapté pour le procédé de mesure selon une des revendications précédentes,
avec un laser accordable sans changement de mode dans au moins une plage de longueur d'onde, caractérisé

en ce qu'il est prévu deux interféromètres de mesure comportant chacun un trajet de mesure,
dans lesquels le trajet de référence formé par la somme ou la différence arithmétique des deux trajets de mesure présente une longueur constante, et qui comportent chacun un diviseur de rayon, un réflecteur fixe dans l'espace et un réflecteur mobile et qui, par l'intermédiaire d'un diviseur de rayon primaire ainsi que d'au moins un réflecteur supplémentaire ou d'un guide optique, reçoivent le rayon du même laser, un signal d'interférence qui est mesuré à l'aide d'un détecteur photo-électrique étant formé chaque fois.

9. Dispositif d'interférométrie laser selon la revendication 8, caractérisé en ce que le laser est un laser à semi-conducteur.

10. Dispositif d'interférométrie laser selon la revendication 8 ou 9, caractérisé en ce qu'il est prévu, pour les signaux d'interférence des interféromètres de mesure, des préamplificateurs dont le facteur d'amplification évolue de manière inversement proportionnelle à la puissance du laser.

11. Dispositif d'interférométrie laser selon une des revendications 8 à 10, caractérisé en ce qu'au moins un des interféromètres de mesure présente deux signaux d'interférence déphasés de 90° qui sont mesurés chaque fois par des détecteurs photo-électriques.

12. Dispositif d'interférométrie laser selon une des revendications 8 à 11, caractérisé en ce que les trajets de mesure sont disposés alignés sur un axe, les réflecteurs mobiles étant reliés de manière rigide l'un à l'autre sur leur face arrière et étant montés mobiles linéairement le long des trajets de mesure entre les diviseurs de rayon des deux interféromètres de mesure et le trajet de référence formé à partir de la somme arithmétique des deux trajets de mesure présentant une longueur constante.

13. Dispositif d'interférométrie laser selon une des revendications 8 à 11, caractérisé en ce que les trajets de mesure sont disposés le long d'axes parallèles, les rétro-réflecteurs mobiles étant reliés de manière rigide l'un à l'autre et étant montés mobiles linéairement et le trajet de référence formé à partir de la différence arithmétique des deux trajets de mesure présentant une longueur constante.

14. Dispositif d'interférométrie laser selon une des revendications 8 à 11, caractérisé en ce que les trajets de mesure sont disposés alignés sur un axe, un réflecteur mobile linéairement le long des trajets de mesure étant disposé entre les diviseurs de rayon des deux interféromètres de mesure et le trajet de référence formé à partir de la somme arithmétique des deux trajets de mesure présentant une longueur constante.

15. Dispositif d'interférométrie laser selon une des revendications 8 à 14, caractérisé en ce qu'il est prévu, pour automatiser le traitement des phases, un compteur ou une électronique de comptage ainsi qu'une électronique de traitement ou un calculateur.

16. Dispositif d'interférométrie laser selon une des revendications 8 à 15, caractérisé en ce qu'au moins une partie du dispositif est agencée sous forme d'optique intégrée et une partie du trajet optique est conformée en guide optique.

Fig. 1

Fig. 2

Fig. 3

Fig. 4

Fig. 5